# EUROPÄISCHE PATENTANMELDUNG

(11) **EP 1 517 524 A1**
(43) Veröffentlichungstag der Anmeldung: **23.03.2005**
(21) Anmeldenummer: 03021086.8
(22) Anmeldetag: 18.09.2003
(51) Int. Cl.: H04M 3/38, H04M 3/42, H04M 3/56, H04L 12/18, H04Q 3/72, H04Q 7/22, G06F 1/00

(54) **Verfahren und Vermittlungsanlage zum Aufbauen einer Telekommunikationsverbindung zwischen zwei Endgeräten**

(71) Anmelder: Mox Telecom AG, 40878 Ratingen (DE)
(72) Erfinder: Schulz, Jürgen, Dr., 41516 Gravenbroich (DE); Schamel, Günter, Dr., 40880 Ratingen (DE)
(74) Vertreter: COHAUSZ & FLORACK

(57) **Zusammenfassung**

Die Erfindung betrifft Verfahren zum Aufbauen einer Telekommunikationsverbindung zwischen mindestens zwei Endgeräten (1,2), bei dem eine Anfrage (3) für eine Verbindung zwischen einem ersten Endgerät (1) und mindestens einem zweiten Endgerät (2) an einen Vermittlungscomputer (4) gesendet wird, wobei die Anfrage die Anschlusskennung des ersten Endgerätes, mindestens die Anschlusskennung des zweiten Endgerätes und eine Identifikationskennung enthält, bei dem die Anfrage vom Vermittlungscomputer automatisch ausgewertet wird, bei dem eine erste Verbindung mit dem ersten Endgerät und mindestens eine zweite Verbindung mit dem zweiten Endgerät vom Vermittlungscomputer auf der Basis der in der Anfrage enthaltenen Kennungen aufgebaut wird und bei dem die mindestens zwei Verbindungen vom Vermittlungscomputer zusammengeschaltet werden.

Die Erfindung betrifft auch eine Anlage zur Durchführung des Verfahrens.

## Beschreibung

Die Erfindung betrifft ein Verfahren zum Aufbauen einer Telekommunikationsverbindung zwischen zwei Endgeräten sowie eine Anlage zur Durchführung des Verfahrens.

Aus dem Stand der Vermittlung von Ferngesprächen ist es bekannt, dass in einer Zentrale auf einen Anruf eines Teilnehmers ein weiterer Teilnehmer angerufen wird und die bestehenden Verbindungen dann miteinander zusammengeschaltet werden.

Eine in den letzten Jahren bekannt gewordene Anwendung dieser Technik verwendet sogenannte im Voraus bezahlte Karten (Prepaid Cards). Diese werden für einen bestimmten Wert verkauft, wobei der Nutzer mit der Karte eine - in der Regel für ihn selber kostenlose - Rufnummer (beispielsweise beginnend mit 0800 ...) und eine Identifikationskennung, insbesodnere eine Personal Identification Number (PIN) erhält. Insbesondere für Auslandsgespräche werden die Prepaid Cards immer beliebter.

Durch einen Anruf mit Hilfe eines ersten Endgerätes (Telefon) bei der auf der Karte angegebenen Rufnummer wird eine erste Verbindung mit einer Vermittlungsanlage hergestellt. Der anrufende Teilnehmer muss sich zunächst mit der Identifizierungskennung ausweisen und kann anschließend die gewünschte Anschlusskennung (Rufnummer) des zweiten Endgerätes eingeben. Die Verbindung mit dem gewünschten zweiten Endgerät wird von der Vermittlungsanlage hergestellt. Die Kosten für die Verbindung (des Telefonats) werden dann mit dem mit der Karte verbundenen Guthaben verrechnet. Das Vermittlungssystem basiert dabei im Wesentlichen auf einem Vermittlungscomputer, der die eingehenden und ausgehenden Verbindungen vermittelt. Mit anderen Worten stellt der Teilnehmer die erste Verbindung selber her, während die zweite Verbindung durch den Vermittlungscomputer hergestellt und mit der ersten Verbindung vermittelt wird.

Ein wesentliches Merkmal des beschriebenen Verfahrens besteht darin, dass die Eingabe der Identifizierungskennung und der Anschlusskennung des zweiten Endgerätes über das erste Endgerät durch das Tonwahlverfahren erfolgen muss. Daher ist grundsätzlich das Verfahren nicht mit Endgeräten durchführbar, die nur für das Impulswahlverfahren eingerichtet sind.

Mit dem beschriebenen Verfahren sind zahlreiche Nachteile verbunden.

Zunächst sind die Gebühren für den Inhaber einer kostenlosen Rufnummer (0800-Nummer) in einigen Ländern erheblich, so dass sich die durch die Prepaid Card ergebenden Vorteile verringern. Denn die Verbindungskapazitäten werden in großen Margen eingekauft, um im Vergleich zu normalen Tarifen die verringerten Kosten an die Käufer der Karten zu übertragen. Sind die Kosten auf der Seite des Anbieters durch zusätzliche Kosten erhöht, so ist das Verfahren entsprechend weniger rentabel für den Anbieter.

Darüber hinaus ist es in einigen Ländern nicht möglich aus öffentlichen Telefonzellen eine kostenlose Rufnummer zu wählen, um danach mit Tonwahlverfahren weitere Informationen zu übertragen. Denn diese Telefonzellen werden bei einer Anwahl einer kostenlosen Rufnummer automatisch auf das Impulswahlverfahren umgestellt.

Des weiteren sind in vielen Ländern die überwiegende Anzahl der Festnetztelefone nur mit Impulswahlverfahren ausgestattet, so dass prinzipiell mit diesen Endgeräten das Verfahren nicht durchführbar ist. Daher ist die Anwendung dort im wesentlichen auf Mobil-Telefone und auf einzelne Festnetztelefone beschränkt.

Schließlich fallen bei Anrufen von ausländischen kostenlosen Rufnummern aufgrund der Auslandsverbindung für den Anwender doch Kosten an, so dass sich, das Prepaid Card System nur zu erhöhten Kosten durchführen lässt, die den Erfolg der Prepaid Cards deutlich verringern.

Der Erfindung liegt daher das technische Problem zugrunde, ein verbessertes Verfahren für eine automatische Vermittlung von Verbindungen von Telekommunikationsendgeräten anzugeben, das die zuvor aufgezeigten Nachteile aufhebt.

Das zuvor aufgezeigte technische Problem wird erfindungsgemäß durch ein Verfahren zum Aufbauen einer Telekommunikationsverbindung zwischen mindestens zwei Endgeräten gelöst, bei dem eine Anfrage für eine Verbindung zwischen einem ersten Endgerät und mindestens einem zweiten Endgerät an einen Vermittlungscomputer gesendet wird, wobei die Anfrage die Anschlusskennung des ersten Endgerätes, mindestens die Anschlusskennung des zweiten Endgerätes und eine Identifikationskennung enthält, bei dem die Anfrage vom Vermittlungscomputer automatisch ausgewertet wird, bei dem eine erste Verbindung mit dem ersten Endgerät und mindestens eine zweite Verbindung mit dem zweiten Endgerät vom Vermittlungscomputer auf der Basis der in der Anfrage enthaltenen Kennungen aufgebaut wird und bei dem die mindestens zwei Verbindungen vom Vermittlungscomputer zusammengeschaltet werden.

Erfindungsgemäß ist also erkannt worden, dass es nicht notwendig ist, dass für die Vermittlung der Verbindungen die erste Verbindung zunächst vom ersten Endgerät aufgebaut werden muss, die gerade die im Stand der Technik bekannten Probleme hervorgerufen hat. Statt dessen werden auf einem separaten Weg die für den Aufbau der Verbindung zwischen dem ersten und dem zweiten Endgerät notwendigen Informationen auf den Vermittlungscomputer mittels der Anfrage übertragen. Der Vermittlungscomputer ist dann anschließend in der Lage, bei Verbindungen zunächst auf zu bauen und danach beide Verbindungen miteinander zu vermitteln.

Sämtliche aus dem Stand der Technik bekannten Probleme werden durch die erfindungsgemäße Lösung behoben.
- Alle Endgeräte (Telefone) können unabhängig davon, ob sie das Tonwahlverfahren oder das Impulswahlverfahren unterstützen in den Verbindungsaufbau integriert werden. Denn sie werden vom Vermittlungscomputer angerufen.
- Soll ein öffentliches Telefon als erstes Endgerät genutzt werden, so kann in der Anfrage an den Vermittlungscomputer die in der Regel an dem öffentlichen Telefon angebrachte Rufnummer angegeben werden. Da dieses selbstständig angerufen wird, kann eine Umstellung des Wählverfahrens für dieses Telefon keine Beeinträchtigung des Verfahrens darstellen.
- Die für den Anrufer an sich kostenlose Rufnummer (0800-Nummer) wird nicht benötigt, so dass für den Besitzer der Rufnummer und Anbieter des Verfahrens auch keine zusätzlichen Verbindungskosten entstehen können.
- Bei aus dem Ausland eingehenden Anfragen an den Vermittlungscomputer entstehen in der Regel kaum höhere Kosten, als wenn der Vermittlungscomputer im Inland erreichbar wäre.

Auch wenn zuvor die Probleme des Standes der Technik sowie die erfindungsgemäße Lösung für die Anwendung von Prepaid Cards erläutert worden ist, ist die Erfindung nicht auf diese Anwendung beschränkt. Die Vermittlung kann beispielsweise auch ohne die Übermittlung der Identifikationskennung erfolgen, wenn beispielsweise die Anschlusskennung des ersten Endgerätes eine dem Vermittlungscomputer bekannte Kennung ist, zu deren Lasten die Kosten der Verbindung abgerechnet werden können. Daher stellt ein Verfahren ohne die Übermittlung einer Identifikationskennung an sich auch eine Lösung des oben beschriebenen technischen Problems dar.

Im folgenden werden weitere vorteilhafte Ausgestaltungen der Erfindung erläutert.

In bevorzugter Weise wird die Anfrage als elektronische Nachricht an den Vermittlungscomputer gesendet. Dabei kann die Anfrage als SMS-Nachricht (SMS - short message system) gesendet werden, die die Kennungen in Form von computerlesbaren Zeichen enthält. Ebenso kann die Anfrage als Email (elektronische Post) gesendet werden, wobei der Text der Email die Kennungen in Form von computerlesbaren Zeichen enthält. Sowohl eine SMS als auch eine Email sind bei ihrer Versendung nur mit geringen oder gar keinen zusätzlichen Kosten verbunden. Dieses gilt zudem auch für das Versenden von SMS ins Ausland. Bei Emails fallen in der Regel keine gesonderten Kosten, sofern bereits für andere Anwendungen ein entsprechender Computeranschluss vorhanden ist.

Eine weitere Ausgestaltung des erfindungsgemäßen Verfahrens besteht darin, dass das Email mit einer Datei gesendet wird, in der Vermittlungscomputerlesbare Zeichen oder Audioinformationen enthalten sind. Die Datei und nicht der Text der Email wird dann vom Vermittlungscomputer ausgewertet. Im Falle einer Audiodatei können die Audioinformation über eine Spracherkennung vom Vermittlungscomputer erfasst werden. Das hat den Vorteil, dass ein Anwender seinen Vermittlungswunsch aufsprechen kann, wodurch die Anwendung des Verfahrens weiter vereinfacht wird.

Ebenso ist es möglich, dass die Anfrage als Telefax an den Vermittlungscomputer gesendet wird. Dieses Verfahren bedeutet zwar in der Regel höhere Übertragungskosten als bei elektronischen Nachrichten, kann aber dann eingesetzt werden, wenn das Versenden von elektronischen Nachrichten nicht möglich ist. Die auf dem übertragenen Telefax enthaltenen Zeichen werden dann mittels einer Texterkennung erfasst und anschließend wird der Verbindungsaufbau durchgeführt.

Das zuvor beschrieben Verfahren einschließlich der erwähnten Ausgestaltungen ist bisher für eine Anwendung mit Telefonapparaten als erste Endgeräte beschrieben worden. Das Verfahren kann bei einer weiteren Ausgestaltung auch mit einem ersten Endgerät in Form eines Telefaxgerätes oder eines Computers eingesetzt werden. Dasselbe gilt auch für die zweiten Endgeräte. Die Kosten für eine Übertragung von Telefaxen kann dadurch ebenfalls gesenkt werden, gleiches gilt für eine direkte Verbindung von zwei Computern.

In bevorzugter Weise wird das Verfahren so durchgeführt, dass die Anfrage vom ersten Endgerät gesendet wird, mit dem anschließend der Vermittlungscomputer die erste Verbindung herstellt. Hier liegt die Anwendung vor allem in der Nutzung von mobilen Telefonen, da diese in der Lage sind, elektronische Nachrichten zu versenden.

Es ist jedoch ebenfalls möglich, dass die Anfrage von einem separaten Endgerät, beispielsweise einem mobilen Telefon oder einem Computer, gesendet wird. Anschließend wird dann vom Vermittlungscomputer eine erste Verbindung mit dem eigentlichen ersten Endgerät aufgebaut. Dieses kann dann ein herkömmliches Festnetztelefon ohne die Möglichkeit des Versendens von elektronischen Nachrichten sein.

Die Identifikationskennung, die Teil der in der Anfrage enthaltenen Informationen ist, kann in bekannter Weise durch eine Personal Identification Number (PIN) gebildet sein, die der Teilnehmer vom Anbieter des Verfahrens erworben hat. Mit der PIN ist ein Guthaben beim Anbieter des Verfahrens verbunden, mit dem die Kosten jeder Verbindung verrechnet werden.

Bei der Nutzung eines Telefons mit Übermittlung der Anschlusskennung des anrufenden Telefons, beispielsweise ISDN-Telefon oder Mobiltelefon, kann die Abrechnung auch über den Netzwerkbetreiber des Telekommunikationsnetzes erfolgen. Daher liegt eine weitere Ausgestaltung des Verfahrens darin, dass die Anfrage als Identifikationskennung die Anschlusskennung des die Anfrage sendenden Endgerätes enthält. Der Teilnehmer muss also nicht eine gesonderte Karte bzw. Zugangsberechtigung mit PIN erwerben, um das System zu nutzen, so dass der Nutzer die Kosten über seinen bereits bestehenden Nutzungsvertrag abrechnen lassen kann. Daher sind für diese Anwendung keine zusätzlichen Hürden aufgebaut, zunächst eine Zugangsberechtigung zu erwerben, so dass das Verfahren bei dieser bevorzugten Ausgestaltung noch erfolgreicher eingesetzt werden kann. Zur Sicherheit wird dann vor einem Verbindungsaufbau die in der Anfrage enthaltene Identifikationskennung mit der mit der elektronischen Nachricht verbundenen Anschlusskennung verglichen. Stimmen diese überein, dann kann die mit der Anfrage übersandte Anschlusskennung des die Anfrage sendenden Endgerätes für die Abrechnung der Kosten verwendet werden.

Zuvor ist das Verfahren hauptsächlich so beschrieben worden, dass zwei Endgeräte miteinander verbunden werden. Dieses stellt sicherlich die Hauptanwendung dar. Darüber hinaus kann das Verfahren auch dazu verwendet werden, Konferenzen zu schalten. Dazu wird ein erstes Endgerät und mindestens zwei zweite Endgeräte mit Hilfe des Vermittlungscomputers miteinander verbunden. Die entsprechende Anfrage enthält dann neben der Identifikationskennung, der Anschlusskennung des ersten Endgerätes sämtliche, also mindestens zwei Anschlusskennungen der zweiten Endgeräte in auswertbarer Form. Die Anwendung der Prepaid Cards kann dadurch einen größeren Nutzen erhalten, da es mit dem erfindungsgemäßen Verfahren sehr einfach ist, eine Telefonkonferenz auf zu bauen. Etwas, was häufig zwar technisch mit dem ersten Endgerät möglich ist, aber nicht hinreichend vom Benutzer beherrscht wird. Denn das Aufbauen der Telefonkonferenz wird vollständig dem Vermittlungscomputer überlassen.

Bei einer weiteren Ausgestaltung der vorliegenden Erfindung wird die Anfrage an einen ersten Computer gesendet und die Anfrage wird anschließend vom ersten Computer an den Vermittlungscomputer elektronisch weitergeleitet. Dieses geschieht vorzugsweise über ein Computernetzwerk, insbesondere über das Internet. Diese Variante des beschriebenen Verfahrens kann insbesondere bei Auslandsverbindungen eingesetzt werden. Denn die Kosten des Versendens von elektronischen Anfragen an nationale Empfänger sind dann geringer, als wenn die elektronischen Nachrichten an einen ausländischen Empfänger gesendet werden müssen. Es ist also möglich, in verschiedenen Ländern separate Computer anzuordnen, die, die alleinige Aufgabe haben, die Anfragen an einen zentralen Vermittlungscomputer weiter zu leiten.

Das erfindungsgemäße Verfahren bietet auch die Möglichkeit, dass eine den Zeitpunkt der aufzubauenden Verbindung definierende Zeitinformation mit der Anfrage gesendet wird. Dabei kann die Zeitinformation als absolute Zeit oder als Zeitdifferenz zum Zeitpunkt des Übersendens der Anfrage definiert werden. Somit ist ein zeitversetztes Vermitteln der gewünschten Verbindung zwischen dem ersten und dem zweiten Endgerät möglich. Darüber hinaus ist es dann auch möglich, dass vom Vermittlungscomputer eine Nachricht, beispielsweise eine SMS oder ein Email an das zweite Endgerät über die geplante Verbindung gesendet wird. Der Teilnehmer am zweiten Endgerät kann sich dann auf das zukünftige Gespräch vorbereiten.

Das oben aufgezeigte technische Problem wird erfindungsgemäß auch durch eine Anlage zur Vermittlung . einer Telekommunikationsverbindung zwischen mindestens zwei Endgeräten zur Durchführung eines Verfahrens nach einem der vorangehend beschriebenen Verfahren gelöst. Diese Anlage weist auf einen Vermittlungscomputer, Mittel zum Empfangen einer Anfrage für eine Verbindung zwischen einem ersten Endgerät und mindestens einem zweiten Endgerät, wobei die Anfrage mindestens die Anschlusskennung des ersten Endgerätes, die Anschlusskennung des zweiten Endgerätes und eine Identifikationskennung enthält, Mittel zur automatischen Auswertung der Anfrage, Mittel zum Aufbauen einer ersten Verbindung mit dem ersten Endgerät und mindestens einer zweiten Verbindung mit mindestens dem zweiten Endgerät auf der Basis der in der Anfrage enthaltenen Kennungen und Mittel zum Zusammenschalten der Verbindungen.

Die Mittel zum Empfangen einer Anfrage können als eine Verbindung zu einem mobilen Telefonfunknetz ausgebildet sein, über die elektronische Nachrichten als SMS empfangen werden können. Ebenso kann es sich um eine Internetverbindung handeln, die den Empfang von Emails ermöglicht. Schließlich können die Mittel als Faxkarte eines Computers ausgebildet sein, um eine Anfrage in Form eines Telefaxes empfangen zu können.

Die Mittel zum automatischen Auswerten der Anfrage beruhen hauptsächlich auf Programmen, die die in den elektronischen Nachrichten enthaltenen computerlesbaren Zeichen erkennen können. Darüber hinaus können die Mittel auf dem Computer ablaufende Texterkennungs- und Spracherkennungsprogramme umfassen.

Die Mittel zum Aufbauen von Verbindungen mit dem ersten Endgerät und mindestens dem zweiten Endgerät können als Telefonschnittstellen für Computer ausgebildet sein, mittels derer mindestens zwei Telefonverbindungen aufgebaut werden können. Die Mittel zum Zusammenschalten der Verbindungen sind dann ebenfalls als Programm zum Ansteuern der Telefonschnittstellen ausgebildet.

Das erfindungsgemäße Verfahren werden im Folgenden anhand von Ausführungsbeispielen näher erläutert, wobei auf die beigefügte Zeichnung Bezug genommen wird. In der Zeichnung zeigen
- Fig. 1: ein Schaubild zur Erläuterung eines ersten Ausführungsbeispiels des erfindungsgemäßen Verfahrens,
- Fig. 2: ein Schaubild zur Erläuterung eines zweiten Ausführungsbeispiels des erfindungsgemäßen Verfahrens und
- Fig. 3: ein Darstellung zur Verdeutlichung des Aufbaus der Informationen in einer Anfrage, die im Rahmen des erfindungsgemäßen Verfahrens eingesetzt wird.

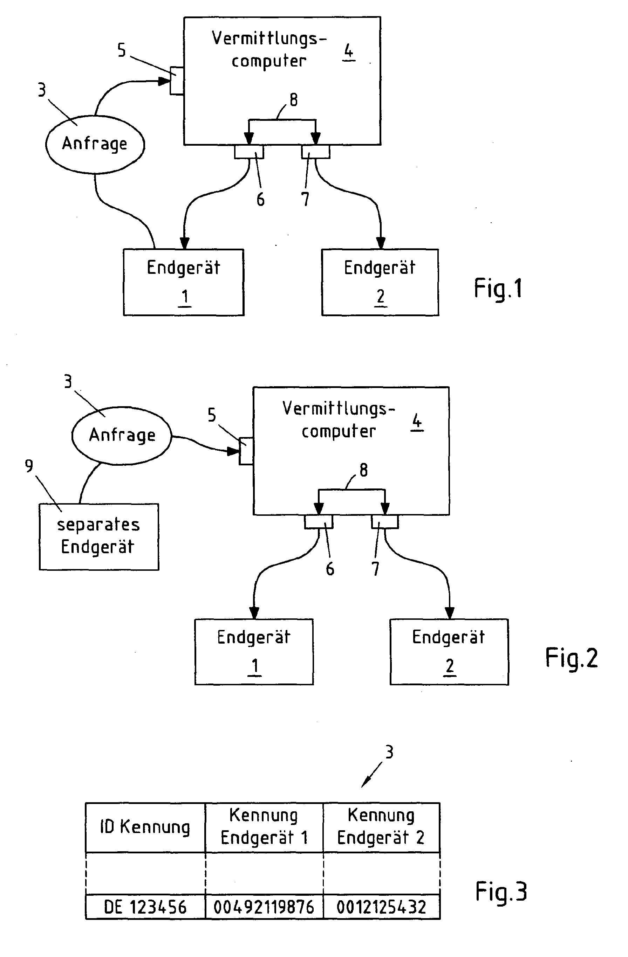

Fig. 1 zeigt ein erstes Ausführungsbeispiel des erfindungsgemäßen Verfahrens in einem schematischen Schaubild.

Ein erstes Endgerät 1 soll eine Verbindung mit einem zweiten Endgerät 2 aufnehmen. Dazu sendet das erste Endgerät 1 eine Anfrage 3 für eine Verbindung zwischen dem ersten Endgerät 1 und einem zweiten Endgerät 2 an einen Vermittlungscomputer 4, wobei die Anfrage mindestens die Anschlusskennung des ersten Endgerätes 1, die Anschlusskennung des zweiten Endgerätes 2 und eine Identifikationskennung enthält. Diese werden weiter unten anhand der Fig. 3 näher erläutert. Die Identifikationskennung dient unter anderem einer Zuordnung der Kosten zu einer bestimmten Prepaid Card oder ähnlichem. Ausgehend von einem Startguthaben, das beispielsweise dem Verkaufswert der Prepaid Card entspricht, werden die Kosten aller über die zugehörigen Identifikationskennung geführten Verbindungen abgerechnet. Ist das Guthaben verbraucht, verliert die Identifikationskennung ihre Wirkung, weitere Gespräche sind dann nicht mehr möglich.

Die Vermittlungsanfrage erreicht den Vermittlungscomputer 4 über eine Schnittstelle 5, beispielsweise eine Schnittstelle zu einem mobilen Telefonnetzwerk, eine Schnittstelle zum Empfangen von Emails,oder eine Faxkarte zum Empfangen von Telefaxen.

Die Anfrage 3 wird vom Vermittlungscomputer 4 automatisch ausgewertet. Dazu werden entweder direkt computerlesbare Informationen der Anfrage 4 entnommen oder die Informationen der Anfrage werden durch eine Texterkennungsoder Spracherkennungssoftware erkannt. Die jeweilige Auswerteart hängt von der Art der in der Anfrage enthaltenen Informationen ab. Siehe dazu die allgemeine Beschreibung der verschiedenen Arten der Formate der Anfragen.

Nach dem automatischen Auswerten der Anfrage 3 wird vom Vermittlungscomputer 4 über eine erste Telefonschnittstelle 6 eine erste Verbindung mit dem ersten Endgerät 1 und über eine zweite Telefonschnittstelle 7 eine zweite Verbindung mit dem zweiten Endgerät 2 auf der Basis der in der Anfrage 3 enthaltenen Kennungen aufgebaut. Die Verbindungen sind als Pfeile dargestellt.

Schließlich werden die beiden Verbindungen vom Vermittlungscomputer 4 zusammengeschaltet. Dieser Vorgang wird mit dem Doppelpfeil 8 in Fig. 1 dargestellt.

Die Verbindung zwischen den beiden Endgeräten 1 und 2 bleibt solange bestehen, bis entweder die Verbindung bei einem der beiden Endgeräte 1 oder 2 beendet wird oder bis der Vermittlungscomputer 4 die Verbindung unterbricht. Ein Grund für die Unterbrechung der Verbindung durch den Vermittlungscomputer kann unter anderem darin liegen, dass das Guthaben der zugehörigen Prepaid Card aufgebraucht ist.

Die beiden Endgeräte können beide Telefonapparat, Telefaxgerät oder als Computer ausgestaltet sein.

Bei dem in Fig. 1 dargestellten Ausführungsbeispiel wird die Anfrage vom ersten Endgerät 1 selbst gesendet, das anschließend vom Vermittlungscomputer zurückgerufen wird.

Bei dem in Fig. 2 dargestellten Ausführungsbeispiel wird die Anfrage von einem separaten Endgerät 9 gesendet. Die weiteren in Fig. 2 dargestellten Elemente sowie deren Zusammenwirken entsprechen denen aus Fig. 1.

Fig. 3 zeigt zunächst in der oberen Zeile exemplarisch eine mögliche Anordnung der einzelnen Informationsblöcke in einer Anfrage 3. Von links nach rechts sind zunächst die Identifikationskennung (ID Kennung), die Kennung des ersten Endgerätes 1 und die Kennung des zweiten Endgerätes 2.

In der unteren Zeile in Fig. 3 ist ein konkretes Beispiel dargestellt. Die Identifikationskennung lautet "DE123456". Dabei handelt es sich um die Kennung zu einer in Deutschland gekauften Prepaid Card. Daran schließt sich die Anschlussnummer "00492119876" für das erste Endgerät 1 an, einem Telefonanschluss in Düsseldorf in Deutschland. Schließlich enthält die Anfrage die Anschlussnummer "0012125432" für das zweite Endgerät, einem Telefonanschluss in New York in den USA.

## Patentansprüche

1. Verfahren zum Aufbauen einer Telekommunikationsverbindung zwischen mindestens zwei Endgeräten,
- bei dem eine Anfrage für eine Verbindung zwischen einem ersten Endgerät und mindestens einem zweiten Endgerät an einen Vermittlungscomputer gesendet wird, wobei die Anfrage die Anschlusskennung des ersten Endgerätes, mindestens die Anschlusskennung des mindestens zweiten Endgerätes und eine Identifikationskennung enthält,
- bei dem die Anfrage vom Vermittlungscomputer automatisch ausgewertet wird,
- bei dem eine erste Verbindung mit dem ersten Endgerät und mindestens eine zweite Verbindung mit dem zweiten Endgerät vom Vermittlungscomputer auf der Basis der in der Anfrage enthaltenen Kennungen aufgebaut wird und
- bei dem die mindestens zwei Verbindungen vom Vermittlungscomputer zusammengeschaltet werden.

2. Verfahren nach Anspruch 1,
bei dem die Anfrage als elektronische Nachricht an den Vermittlungscomputer gesendet wird.

3. Verfahren nach Anspruch 2,
bei dem die Anfrage als SMS-Nachricht gesendet wird, die die Kennungen in Form von computerlesbaren Zeichen enthält.

4. Verfahren nach Anspruch 2,
bei dem die Anfrage als Email gesendet wird, wobei der Text der Email die Kennungen in Form von computerlesbaren Zeichen enthält.

5. Verfahren nach Anspruch 4,
bei dem das Email mit einer Datei gesendet wird, in der computerlesbare Zeichen oder Audioinformationen enthalten sind.

6. Verfahren nach Anspruch 5,
bei dem die Audioinformationen über eine Spracherkennung vom Vermittlungscomputer erfasst wird.

7. Verfahren nach Anspruch 1,
bei dem die Anfrage als Telefax an den Vermittlungscomputer gesendet wird.

8. Verfahren nach Anspruch 7,
bei dem die auf dem übertragenen Telefax enthaltenen Zeichen mittels einer Texterkennung erfasst werden.

9. Verfahren nach einem der Ansprüche 1 bis 8,
bei dem als erstes Endgerät ein Telefonapparat, ein Telefaxgerät oder Vermittlungscomputer eingesetzt wird.

10. Verfahren nach einem der Ansprüche 1 bis 9,
bei dem als zweites Endgerät ein Telefonapparat, ein Telefaxgerät oder Vermittlungscomputer eingesetzt wird.

11. Verfahren nach einem der Ansprüche 1 bis 10,
bei dem die Anfrage vom ersten Endgerät gesendet wird.

12. Verfahren nach einem der Ansprüche 1 bis 10,
bei dem die Anfrage von einem separaten Endgerät gesendet wird.

13. Verfahren nach einem der Ansprüche 1 bis 12,
bei dem mit der Anfrage als Identifikationskennung die Anschlusskennung des die Anfrage sendenden Endgerätes übermittelt wird.

14. Verfahren nach einem der Ansprüche 1 bis 13,
- bei dem die Anfrage an einen ersten Computer gesendet wird und
- bei dem die Anfrage vom ersten Computer an den Vermittlungscomputer elektronisch weitergeleitet wird, vorzugsweise über ein Computernetzwerk, insbesondere über das Internet.

15. Verfahren nach einem der Ansprüche 1 bis 14,
bei dem eine den Zeitpunkt der aufzubauenden Verbindung definierende Zeitinformation mit der Anfrage gesendet wird.

16. Verfahren nach Anspruch 14,
bei dem die Zeitinformation als absolute Zeit oder als Zeitdifferenz zum Zeitpunkt des Übersendens der Anfrage definiert wird.

17. Verfahren nach Anspruch 15 oder 16,
bei dem vom Vermittlungscomputer eine Nachricht an das zweite Endgerät über die geplante Verbindung gesendet wird.

18. Anlage zur Vermittlung einer Telekommunikationsverbindung zwischen mindestens zwei Endgeräten zur Durchführung eines Verfahrens nach einem der Ansprüche 1 bis 17,
- mit einem Vermittlungscomputer,
- mit Mitteln zum Empfangen einer Anfrage für eine Verbindung zwischen einem ersten Endgerät und mindestens einem zweiten Endgerät, wobei die Anfrage mindestens die Anschlusskennung des ersten Endgerätes, mindestens die Anschlusskennung des zweiten Endgerätes und eine Identifikationskennung enthält,
- mit Mitteln zur automatischen Auswertung der Anfrage,
- mit Mitteln zum Aufbauen einer ersten Verbindung mit dem ersten Endgerät und mindestens einer zweiten Verbindung mit dem zweiten Endgerät auf der Basis der in der Anfrage enthaltenen Kennungen und
- mit Mitteln zum Zusammenschalten der Verbindungen.
